Europäisches Patentamt

(19) European Patent Office (11) Numéro de publication: **0 108 024**
**B1**
Office européen des brevets

(12) **FASCICULE DE BREVET EUROPEEN**

(45) Date de publication du fascicule du brevet: (51) Int. Cl.⁴: **E 02 B 15/04**
**27.12.85**

(21) Numéro de dépôt: **83420163.4**

(22) Date de dépôt: **13.10.83**

(54) **Barrage flottant filtrant anti-pollution.**

(30) Priorité: **28.10.82 FR 8218373**

(43) Date de publication de la demande:
**09.05.84 Bulletin 84/19**

(45) Mention de la délivrance du brevet:
**27.12.85 Bulletin 85/52**

(84) Etats contractants désignés:
**BE DE IT NL**

(56) Documents cités:
**FR - A - 2 101 764**
**FR - A - 2 163 836**
**US - A - 3 702 657**
**US - A - 4 111 813**

(73) Titulaire: **BAT Taraflex, Société Anonyme dite :,**
**Boulevard Garibaldi, F-69170 Tarare (FR)**

(72) Inventeur: **Viel, Maurice Parc Chalin, Bâtiment**
**Debussy 137 Chemin Louis Chirpaz, F-69130 Ecully (FR)**

(74) Mandataire: **Laurent, Michel et al, 20 rue Louis Chirpaz**
**Boîte postale no. 32, F-69131 Ecully Cedex (FR)**

**Description**

L'invention concerne un nouveau type de barrage souple filtrant anti-pollution destiné à retenir et à absorber des déchets répandus à la surface de l'eau ou en suspension dans celle-ci, tels que notamment des hydrocarbures, des graisses, des solvants ou autres produits chimiques.

La pollution par hydrocarbures est malheureusement bien connue.

Dans le brevet américain US-A-3 702 657, on a décrit un barrage rigide, essentiellement formé par une armature rigide définissant une pluralité d'enceintes contenant une matière absorbante, chaque enceinte étant recouverte d'une grille ajourée. Du fait de sa rigidité, cet ensemble coûteux ne convient que pour de grandes étendues d'eau et non pour l'épuration de canaux de petites dimensions, tels que par exemple les canaux d'effluents d'eaux usées. En outre, dans cette solution, il est indispensable que la matière absorbante remplisse parfaitement les enceintes élémentaires, sinon les hydrocarbures seront mal retenus. Enfin, par suite de sa rigidité, l'ensemble est difficile à monter, à transporter et à stocker, de sorte qu'il est pratiquement destiné à rester sur place.

L'invention pallie ces inconvénients. Elle concerne un nouveau type de barrage souple flottant anti-pollution qui soit facile et économique à transporter, à stocker, à monter et à mettre en oeuvre, donne d'excellents résultats sur le plan de la récupération des déchets, notamment dans les canaux de petites dimensions, et enfin soit auto-flottant afin de suivre les variations de niveau.

Ce barrage anti-pollution destiné à retenir et à absorber des déchets, tels que notamment des hydrocarbures, répandus à la surface de l'eau ou en suspension dans celle-ci, du type comprenant:

— une pluralité de poches ajourées, juxtaposées côte à côte, ouvertes sur le haut, destinées à recevoir le matériau absorbant placé dans des enveloppes poreuses;
— des moyens pour amarrer l'ensemble verticalement et horizontalement aux berges du canal à épurer;
— des moyens de rigidification de l'ensemble, se caractérise:

— en ce que les moyens de rigidification sont placés verticalement entre deux poches souples successives,
— et en ce que la face avant ajourée de chaque poche souple élémentaire est bordée de chaque côté par une bande verticale étanche aux déchets à retenir.

Ainsi, comme la rigidification de l'ensemble n'est réalisée qu'entre deux poches souples successives, l'ensemble est donc facile à replier, à transporter, à stocker ou à monter et peut facilement épouser des profils très variés. Par ailleurs, la face avant ajourée est avantaqeusement plus petite que la face ajourée arrière, de sorte qu'on concentre tout le flux du courant sur la matière absorbante contenue dans l'enveloppe, même si cette enveloppe ne remplit pas exactement tout le volume de la poche élémentaire.

Avantageusement, en pratique:

— les poches sont formées dans une étoffe ajourée, tissée ou non, dont le réseau de la maille de la face avant est moins serré que le réseau de la face arrière;
— la partie supérieure ouverte de chaque poche présente des moyens destinés à fermer celle-ci et à attacher dans celle-ci l'enveloppe poreuse contenant le matériau absorbant;
— les bords étanches de deux poches contiguës sont reliés entre eux par une portion verticale également étanche, dans laquelle est placé ledit moyen de rigidification vertical;
— les bandes étanches et les parties ajourées sont en tissu enduit;
— les moyens d'amarrage de l'ensemble sont constitués par:
  — deux fourreaux verticaux placés à chaque extrémité de l'ensemble, destinés à s'emmancher sur un organe vertical fixé aux berges ou dans le lit du canal,
  — et par un câble horizontal passant dans au moins un fourreau horizontal prévu à cet effet sous l'ensemble;
— l'ensemble présente à chaque extrémité latérale un élément vertical étanche, mobile sur l'axe vertical de liaison avec l'ensemble, destiné à s'appuyer sur les berges, afin d'assurer l'étanchéité de l'ensemble;
— la matière absorbante se présente sous forme de poudre et est placée dans une enveloppe poreuse formant coussin.

La manière dont l'invention peut être réalisée et les avantages qui en découlent ressortiront mieux des exemples de réalisation qui suivent donnés à titre indicatif et non limitatif, à l'appui des figures annexées.

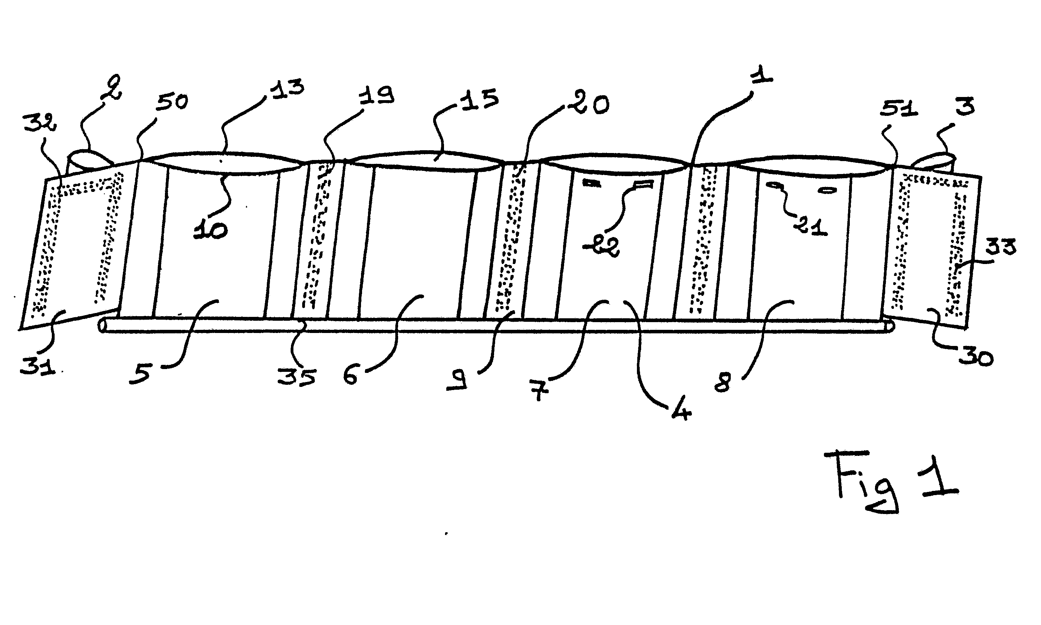

La figure 1 représente, en vue perspective sommaire, un tel ensemble destiné à former barrage flottant.

La figure 2 est une vue grossie d'une des poches caractéristique de ce barrage.

Les figures 3 et 4 représentent sommairement deux modes de fixation de ce barrage aux berges d'un canal.

La figure 5 est une représentation sommaire d'une enveloppe garnie de matière absorbante pulvérulente.

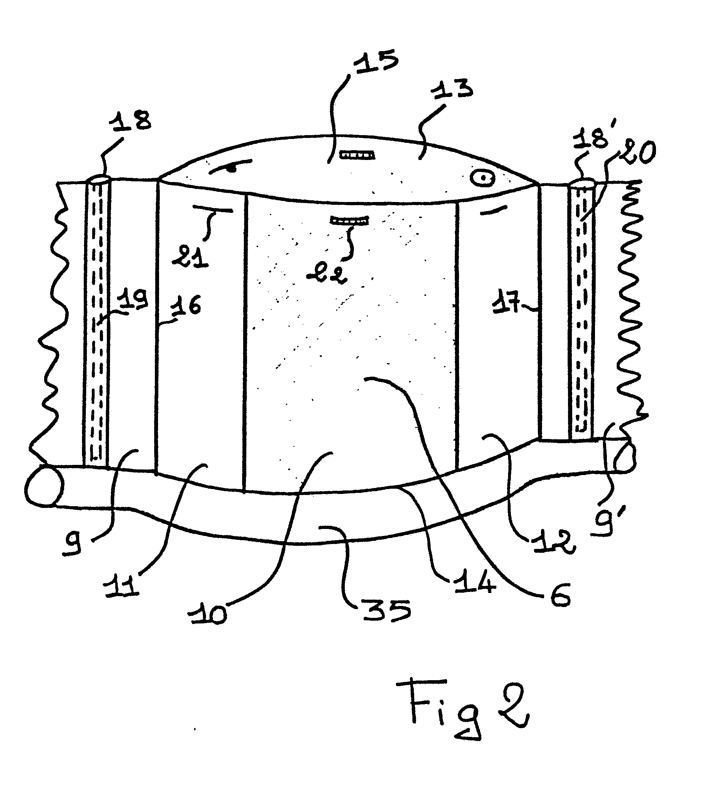

En se référant aux figures, le barrage anti-pollution flottant se compose d'un ensemble vertical (1) souple comprenant à chaque extrémité un fourreau tubulaire vertical d'amarrage (2) et (3), par exemple en tissu enduit souple, soudé ou cousu, à un complexe vertical (4) formé par une pluralité de poches successives juxtaposées ajourées (5-6-7 et 8). Ces poches élémentaires sont séparées entre elles par des portions verticales (9) étanches aux déchets à retenir, par exemple en tissu, notamment enduit ou en un film de matière synthétique souple. Ces poches (6-8) (voir figure 2) se composent essentiellement:

— sur l'avant, d'une étoffe, tissée ou non, ajourée (10), bordée des deux côtés par une bande verticale (11) et (12) en un tissu enduit étanche aux déchets ou en un matériau similaire à (9);
— sur l'arrière, d'une autre étoffe (13), tissée ou non, analogue et parallèle à (10), dont soit la maille du réseau est plus fine que celle de la face avant ou dont la surface est plus grande que celle de la face avant;
— ces deux étoffes avant et arrière (10-13) sont soudées ou cousues sur le bas sur la ligne (14).

La poche élémentaire (6) ainsi formée, fermée sur le bas (14), mais ouverte sur le haut en (15), est soudée par ses côtés (16-17) aux bandes de liaison (9-9'). Ces bandes de liaison (9-9') présentent un fourreau vertical (18-18') destiné à recevoir l'élément vertical de rigidification (19-20), formé par exemple par une latte en bois ou un tube bouché à ses extrémités.

Le haut de chaque poche (5-8) comporte des moyens de fermeture et des moyens d'ancrage de l'enveloppe (25) (figure 5) de matière absorbante (26), telles que par exemple des boutons pressions (21), des bandes adhésives à crochets (22) type Velcro (marque commerciale déposée), des oeillettons ou des boutons.

La matière absorbante se présente sous la forme d'un sac ou d'une enveloppe poreuse (25), par exemple en un voile non tissé léger en fibres synthétiques. Cette enveloppe (25) qui a la forme d'un berlingot fermé à ses deux extrémités (27-28), contient la matière absorbante (26). Avantageusement, cette matière absorbante se présente sous forme pulvérulente. On peut utiliser toute matière connue pour ses propriétés absorbantes, telles que par exemple des pulpes de polyamide, des poudres de mousse de polyuréthane ou des poudres de mousse de résine epoxy broyée, tel que décrit dans la demande de brevet français n° 80/06 538 (FR-A-2 478 667) déposé le 24 Mars 1980.

Les extrémités de l'ensemble (1) formant barrage sont bordées par des bavettes verticales (30) et (31) également étanches aux déchets, réalisées avantageusement en un tissu enduit résistant aux hydrocarbures. Ces bavettes (30) et (31) peuvent être ou non rigidifiées par des lattes horizontales (32) ou verticales (33). Ces bavettes (30-31) sont articulées suivant la ligne de liaison verticale (50-51) avec l'ensemble (1) et sont destinées à assurer l'étanchéité de l'ensemble en prenant appui sur les rives ou sur les berges (40) du canal à traiter. En outre, ces bavettes assurent ainsi le passage obligatoire de l'eau polluée sur les parties ajourées des poches élémentaires et par voie de conséquence sur les enveloppes (25) contenant le matériau absorbant (26). De la sorte, le flux du courant à épurer est bien concentré sur le tissu ajouré (10) et par là sur tout le volume du coussin (25), même si celui-ci ne remplit pas complètement la poche élémentaire (6).

Le bas (14) de l'ensemble (1) comporte un fourreau tubulaire horizontal (35), destiné à recevoir un câble d'amarrage horizontal prenant appui sur chaque berge (40) et plus précisément sur les organes d'amarrage (42), (43). Si nécessaire, un second câble d'amarrage parallèle à celui-ci peut être placé sur le haut de l'ensemble.

La mise en place de l'ensemble s'effectue de la manière suivante. Séparément, on remplit des enveloppes (25) d'une matière absorbante (26).

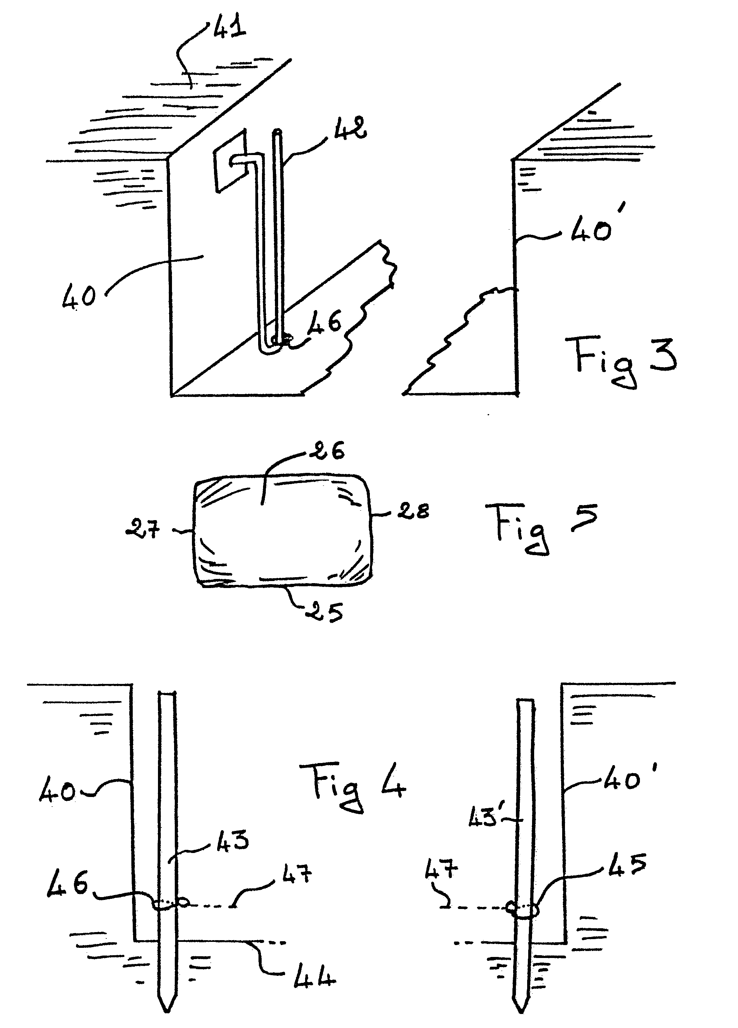

Sur les rives ou sur les berges (40) (figure 3) d'un canal (41) à traiter, on enfonce ou on fixe par tout moyen connu, un organe d'amarrage vertical (42). Si la chose est possible, on peut aussi se contenter d'enfoncer (voir figure 4) un pieux vertical (43) dans le lit (44). Sur ces éléments d'amarrage (42-43-43'), on fait coulisser des anneaux (45, 46) destinés à accrocher le câble d'amarrage (47) qui traverse le lit et est enfilé dans le fourreau horizontal (35). On enfile ensuite les deux fourreaux verticaux latéraux (2-3) sur les pieux (43) verticaux ou analogues (42).

Sous l'effet du courant, les bavettes d'extrémité (30) et (31) sont plaquées contre les berges (40).

Par un moyen quelconque (barque ou à pied), on pose les sacs (25) remplis de matière absorbante vierge (26) dans les poches élémentaires (6-8) ouvertes que l'on ferme ensuite (21-22).

Grâce aux bandes verticales étanches (9-11-12) et aux bavettes latérales étanches (30-31), les pollutions sont canalisées sur les portions poreuses (10), donc sur la matière absorbante (26) contenue dans l'enveloppe (25).

Si d'aventure le niveau d'eau varie, du fait de la densité des sacs (25), l'ensemble peut coulisser le long des pieux (42-43) grâce aux anneaux (45-46). Cet ensemble est donc auto-flottant.

On change les sacs (25) chargés de particules polluées selon un cycle déterminé ou s'il y a lieu, après une décharge accidentelle.

Le barrage selon l'invention présente de nombreux avantages par rapport aux barrages anti-pollution proposés à ce jour. On peut citer:

— du fait de la souplesse générale, la possibilité d'être replié ou roulé sur lui-même, donc facilité de transport, de stockage et de montage;
— la facilité d'exploitation, qui nécessite peu de personnel,
— la possibilité de réaliser des barrages statiques, souples et à prix réduit;

— la facilité de manipulation de l'élément absorbant qui se trouve dans des cartouches faciles à changer et à stocker;

— la possibilité de réaliser des barrages autoflottants, ce qui permet de suivre les variations du niveau de l'eau;

— la possibilité de réaliser simultanément barrage et l'absorption, notamment pour les risées d'hydrocarbures.

De la sorte, ce type de barrage peut être utilisé avantageusement pour lutter contre la pollution dans des rivières, dans des canaux, tels que par exemple dans les effluents d'eaux industrielles, d'eaux usées. On peut avantageusement les placer dans le canal d'entrée d'une station d'épuration d'eaux pluviales ou à la sortie d'un rejet d'aux usées.

## Revendications

1. Barrage souple flottant et filtrant anti-pollution, destiné à retenir et à absorber des déchets, tels que des hydrocarbures, répandus sur l'eau ou en suspension dans celle-ci, du type comprenant:

— une pluralité de poches ajourées (6-8), juxtaposées côte, ouvertes (15) sur le haut, destinées à recevoir le matériau absorbant (26) placé dans des enveloppes poreuses (25);

— des moyens (2-3-35-42-43-47) pour amarrer l'ensemble verticalement et horizontalement aux berges (40) du canal (41) à épurer;

— des moyens de rigidification (19-20) de l'ensemble (1),

caractérisé:

— en ce que les moyens de rigidification (19-20) sont placés verticalement entre deux poches (6-8) souples successives;

— et en ce que la face avant ajourée (10) de chaque poche souple élémentaire (6-8) est bordée de chaque côté par une bande (11-12) verticale étanche aux déchets à retenir.

2. Barrage selon la revendication 1, caractérisé en ce que les bandes étanches (11-12) de deux poches (6-8) contigües sont reliées entre elles par une portion verticale (9), également étanche, dans laquelle est placé le moyen de rigidification (19-20).

3. Barrage selon l'une des revendications 1 et 2, caractérisé en ce que la partie supérieure ouverte (15) de chaque poche (6-8) présente des moyens (21-22) destinés à fermer la poche et à retenir l'enveloppe (25) ajourée contenant la matière absorbante (26).

4. Barrage selon l'une des revendications 1 à 3, caractérisé en ce que les moyens d'amarrage de l'ensemble (1) aux berges (40) du canal (41) sont constitués:

— d'une part, par deux fourreaux verticaux (2-3) placés à chaque extrémité de l'ensemble (1), destinés à s'emmancher sur un pieu (42-43) fixé sur les berges (40) ou dans le lit (44) du canal (41);

— et d'autre part, par un câble horizontal (47) passant dans un foureau (35) fixé au bas de l'ensemble (1).

5. Barrage selon l'une des revendications 1 à 4, caractérisé en ce qu'il présente à chaque extrémité latérale, un élément vertical (30-31) étanche, destiné à s'appuyer sur les berges (40).

6. Barrage selon l'une des revendications 1 à 5, caractérisé en ce que la matière absorbante (26), est constituée par une poudre de résine synthétique placée dans une enveloppe ajourée (25).

7. Barrage selon l'une des revendications 1 à 5, caractérisé en ce que les parties étanches (9-11-12-30-31) et les parties ajourées (10-13) sont réalisées en un tissu enduit.

## Patentansprüche

1. Biegsame schwimmende und Verunreinigungen filtrierende Barriere, die dazu bestimmt ist, Abfälle wie Kohlenwasserstoffe, die auf dem Wasser ausgebreitet oder in dem Wasser in Suspension vorhanden sind, zurückzuhalten und zu absorbieren, wobei die Barriere von derjenigen Art ist, die

— eine Mehrzahl von durchbrochenen Taschen oder Säcken (6-8), die Seite an Seite angeordnet und oben offen (bei 15) sind und die dazu bestimmt sind, das absorbierende Material (26) aufzunehmen, welches in porösen Hüllen (25) angeordnet ist,

— Mittel (2-3-35-42-43-47) zum senkrechten und waagerechten Festlegen des Gebildes an den Ufern (40) des zu filternden Kanals (41) und

— Mittel (19-20) zum Versteifen des Gebildes (1) aufweist,

dadurch gekennzeichnet, daß

— die Mittel (19-20) zum Versteifen senkrecht zwischen zwei aufeinanderfolgenden biegsamen Taschen oder Säcken (6-8) angeordnet sind, und daß

— die vordere durchbrochene Fläche (10) jedes weichen Taschen- oder Sackelementes (6-8) an jeder Seite durch ein vertikales Band (11-12) eingefaßt ist, welches gegenüber den zurückzuhaltenden Abfällen dicht ist.

2. Barriere nach Anspruch 1, dadurch gekennzeichnet, daß die dichten Bänder (11-12) zweier aneinander grenzender Taschen oder Säcke (6-8) unter sich durch einen ebenfalls dichten vertikalen Teil (9) verbunden sind, in welchem das Versteifungsmittel (19-20) angeordnet ist.

3. Barriere nach einem der Ansprüche 1 und 2, dadurch gekennzeichnet, daß der obere offene Teil (15) jeder Tasche bzw. jedes Sackes (6-8) Mittel (21-22) darbietet, die dazu bestimmt sind, die Tasche oder den Sack zu schließen und die durchbrochene Hülle (25) zu halten, welche das absorbierende Material (26) enthält.

4. Barriere nach einem der Ansprüche 1 bis 3, dadurch gekennzeichnet, daß die Mittel zum Festlegen oder Festbinden des Gebildes (1) an den Ufern (40) des Kanals (41)

— einerseits zwei senkrechte Hülsen (2-3), die an jedem Ende des Gebildes (1) angeordnet und dazu bestimmt sind, sich um einen Pfahl (42-43) anzuordnen, der an den Ufern (40) oder im Bett (44) des Kanals (41) befestigt ist, und

— andererseits ein waagerechtes Kabel (47) aufweisen, welches durch eine Hülse (35) hindurchgeht, die unten an dem Gebilde (1) befestigt ist.

5. Barriere nach einem der Ansprüche 1 bis 4, dadurch gekennzeichnet, daß sie an jedem Seitenende ein dichtes vertikales Element (30-31) aufweist, welches dazu bestimmt ist, sich gegen die Ufer (40) zu legen.

6. Barriere nach einem der Ansprüche 1 bis 5, dadurch gekennzeichnet, daß das absorbierende Material (26) durch ein synthetisches Harzpulver dargestellt ist, welches in einer durchbrochenen Hülle (25) angeordnet ist.

7. Barriere nach einem der Ansprüche 1 bis 5, dadurch gekennzeichnet, daß die dichten Teile (9-11-12-30-31) und die durchbrochenen Teile (10-13) aus einem überzogenen Webstoff gebildet sind.

**Claims**

1. Anti-pollution filtering and floating supple barrier, designed to hold back and absorb wastes such as hydrocarbons, spreading over the water or suspended therein, of the type comprising:

— a plurality of perforated pockets (6-8) side-by-side in juxtaposition, open (15) at the top, and designed to receive the absorbing material (26) placed inside porous envelopes (25);

— means (2-3-35-42-43-47) of mooring the equipement vertically and horizontally to the banks (40) of the canal (41) to be cleaned;

— means of rigidifying (19-20) the whole equipment (1),

characterized in that:

— said rigidifying means (19-20) are placed vertically between two successive supple pockets (6-8);

— the perforated front face (10) of every elementary supple pocket (6-8) is bound on each side with a vertical strip (11-12) which is impervious to the wastes to be stopped.

2. Barrier according to claim 1, characterized in that the impervious strips (11-12) of two contiguous pockets (6-8) are interconnected by a vertical portion (9), likewise impervious, in which said rigidifying means (19-20) are placed.

3. Barrier according to one of claims 1 and 2, characterized in that the open upper part (15) of every pocket (6-8) is provided with means (21-22) of closing the pocket and holding the perforated envelope (25) containing the absorbing material (26).

4. Barrier according to one of claims 1 to 3, characterized in that the means of mooring the assembly (1) to the banks (40) of the canal (41) are constituted:

— on the one hand, by two vertical sleeves (2-3) placed on each end of the equipment (1), designed to fit over a mooring-post (42-43) fixed on the banks (40) or in the bed (44) of the canal (41);

— and on the other hand, by a horizontal cable (47) passing through a sheath (35) fixed at the base of the assembly (1).

5. Barrier according to one of claims 1 to 4, characterized in that it is provided at each lateral end, with a tight vertical element (30-31), designed to rest against the banks (40).

6. Barrier according to one of claims 1 to 5, characterized in that the absorbing material (26) is constituted by a synthetic resin powder placed inside a perforated envelope (25).

7. Barrier according to one of claims 1 to 5, characterized in that the impervious parts (9-11-12-30-31) and the perforated parts (10-13) are produced in a coated fabric.

Fig 1

0 108 024

Fig 2

Fig 3

Fig 5

Fig 4